Europäisches Patentamt

European Patent Office

Office européen des brevets

(11) Numéro de publication : **0 500 421 A1**

# (12) DEMANDE DE BREVET EUROPEEN

(21) Numéro de dépôt : **92400372.6**

(22) Date de dépôt : **12.02.92**

(51) Int. Cl.$^5$ : **F16K 15/14,** F16K 7/16, B60H 1/00

(30) Priorité : **21.02.91 FR 9102100**

(43) Date de publication de la demande :
**26.08.92 Bulletin 92/35**

(84) Etats contractants désignés :
**DE ES GB IT**

(71) Demandeur : **VALEO THERMIQUE HABITACLE**
**8, rue Louis-Lormand, La Verriere**
**F-78320 Le Mesnil-Saint-Denis (FR)**

(72) Inventeur : **Larseneur, Patrick**
**43, rue des Chantiers**
**F-78000 Versailles (FR)**

(74) Mandataire : **Gamonal, Didier et al**
**Société VALEO Service Propriété Industrielle**
**30, rue Blanqui**
**F-93406 Saint Ouen (FR)**

(54) **Dispositif de commande d'un courant de fluide comprenant une membrane d'obturation déformable dans la direction du courant.**

(57)    Le dispositif comprend une membrane souple (12) fixée par sa périphérie (11) à la paroi annulaire (3,7) d'une conduite (5). Cette membrane peut prendre une position de fermeture, dans laquelle sa région centrale obture une ouverture de passage (15) définie à l'intérieur de la conduite, et une position d'ouverture, dans laquelle sa région centrale est éloignée de l'ouverture (15) et où le fluide peut traverser des évidements (16) ménagés dans une région annulaire (13) entourant la région centrale (14) de la membrane.

FIG.2

L'invention concerne un dispositif de commande destiné à assurer l'interruption et le réglage du débit d'un courant de fluide, notamment un courant d'air destiné à être envoyé dans l'habitacle d'un véhicule automobile.

Les installations de chauffage et d'aération, ou de climatisation, de l'habitacle des véhicules automobiles comportent habituellement des dispositifs de commande de courants d'air comprenant un obturateur mobile sous forme d'un volet pivotant ou coulissant disposé dans une conduite pour le courant d'air correspondant. Le mouvement de pivotement ou de coulissement de ces volets et la présence de moyens d'entraînement de ceux-ci implique un encombrement important dans la direction du courant et/ou transversalement à cette direction, qui rend ces dispositifs difficile à loger dans l'espace restreint disponible sous le tableau de bord des véhicules.

Le but de l'invention est de remédier à cet inconvénient et de procurer un dispositif de commande peu encombrant.

L'invention a pour objet un dispositif de commande d'un courant de fluide comprenant un obturateur mobile disposé dans une conduite pour ledit courant de fluide et pouvant prendre une première position dans laquelle il obture ladite conduite et une seconde position dans laquelle il permet le passage du courant de fluide, caractérisé en ce que l'obturateur est une membrane souple fixée par sa périphérie à la paroi de la conduite et qui peut être amenée, par un organe d'entraînement agissant dans la direction du courant, dans ladite première position dans laquelle elle vient en appui sur un siège définissant une ouverture de passage pour le courant de fluide dans ladite conduite, laquelle ouverture est alors obturée par une région centrale de la membrane, et dans ladite seconde position, écartée dudit siège, dans laquelle le courant de fluide passe à travers des évidements ménagés dans une région périphérique de la membrane entourant ladite région centrale.

Selon un mode de réalisation préféré de l'invention, le bord de l'ouverture de passage est décalé dans la direction du courant par rapport à la zone de fixation de la membrane à la paroi et est raccordée à cette zone par une portion de paroi à profil arrondi concave formant ledit siège.

Il est avantageux que la première position corresponde à un état stable de la membrane, dans laquelle sa région centrale est sensiblement plane, tandis que la membrane peut être ondulée dans sa seconde position.

L'organe d'entraînement de la membrane peut comprendre un câble coulissant dans une gaine dont une extrémité est fixe, une partie du câble faisant saillie au-delà de ladite extrémité, dans la direction du courant de fluide, et étant attachée à la région centrale de la membrane.

D'autres caractéristiques et avantages de l'invention ressortiront de la description détaillée ci-après d'un exemple de réalisation, et des dessins annexés dans lesquels :

– les figures 1 et 2 sont des vues partielles en coupe d'une installation de chauffage ou de climatisation de véhicule automobile équipé d'un dispositif selon l'invention, la membrane étant en position de fermeture et en position d'ouverture respectivement ; et

– la figure 3 est une vue en plan de la membrane en position d'ouverture.

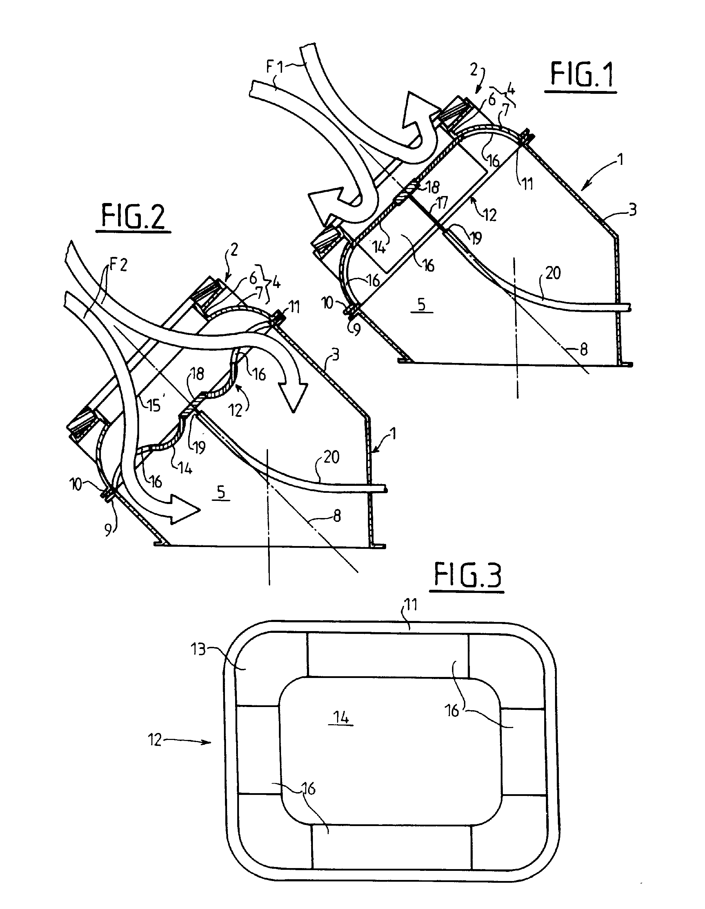

On voit aux figures 1 et 2 deux pièces creuses en matière plastique 1 et 2 appartenant à un boîtier d'une installation de chauffage ou de climatisation, ces deux pièces formant des parois annulaires 3 et 4 qui délimitent une conduite d'air 5, respectivement dans deux régions consécutives de celle-ci. La paroi 3 de la pièce 1 présente au voisinage de la pièce 2 une section transversale constante ayant la forme d'un rectangle à sommets arrondis. La paroi 4 de la pièce 2 présente, dans une région 6 éloignée de la paroi 3, également une section transversale constante en forme de rectangle à sommets arrondis, dont les côtés sont plus petits que ceux de la section de la paroi 3. De cette dernière à la région 6, la paroi 4 comporte une région 7 de section transversale progressivement décroissante, qui présente dans la direction longitudinale de la conduite 5, comme on le voit aux figures 1 et 2, un profil arrondi dont la concavité est tournée vers l'intérieur de la conduite, sensiblement en forme de quart de cercle, la tangente à ce quart de cercle étant sensiblement orientée parallèlement à l'axe longitudinal 8 de la conduite à son extrémité adjacente à la paroi 3, et sensiblement perpendiculairement à cet axe à la jonction des régions 6 et 7.

Les extrémités mutuellement adjacentes de la paroi 3 et de la région 7 de la paroi 4 se raccordent respectivement à deux brides annulaires 9 et 10 appartenant aux pièces 1 et 2 et s'étendant radialement vers l'extérieur à partir de ces parois. Les pièces 1 et 2 présentent d'autres brides pour leur jonction à d'autres pièces non représentées du boîtier. Entre les brides 9 et 10 est serrée une zone marginale 11 d'une membrane souple 12, par exemple en élastomère. Cette membrane a une forme telle qu'elle puisse s'appliquer, par une région annulaire intermédiaire 13 (figure 3) adjacente à la zone marginale 11, sur la face interne de la région 7 de la paroi 4, jusqu'à la jonction des régions 6 et 7, la région centrale restante 14 de la membrane s'étendant selon un plan perpendiculaire à l'axe 8 en travers de l'ouverture 15 définie par cette jonction. Cette position de la membrane, illustrée à la figure 1, correspond de préférence à un état stable de celle-ci, qui peut être obtenue lors de son moulage. Des évidements traversants 16 sont ménagés dans la région annulaire 13 de la membrane, et n'atteignent pas dans la position de la figure 1 le bord de l'ouverture 15.

Un câble d'entraînement 17 est fixé par son extrémité à une pièce de jonction 18 solidaire de la membrane, au centre de celle-ci. Ce câble fait saillie au-delà de l'extrémité 19 d'une gaine 20, cette extrémité étant fixe et orientée dans l'axe 8, et peut coulisser à l'intérieur de la gaine sous l'action d'un mécanisme de commande non représenté. Il peut ainsi amener la pièce 18 de la position qu'elle occupe à la figure 1 à celle représentée sur la figure 2, dans laquelle elle se trouve sensiblement dans le plan de la zone périphérique 11. La membrane s'étend alors sous une forme ondulée, sensiblement radialement entre la pièce 18 et la zone 11, sa région intermédiaire 13 qui comporte les évidements 16 étant écartée de la région de paroi 7.

Dans la position illustrée à la figure 1, la région centrale 14 de la membrane, non évidée, est en contact avec le bord de l'ouverture 15 sur tout le périmètre de celle-ci et obture donc la conduite 5. Les flèches F1 montrent le courant d'air qui ne peut passer de la portion de conduite définie par la paroi 6 vers celle définie par les parois 7 et 3, et est détourné dans une autre direction. Dans la position de la figure 2, l'ouverture 15 est libérée et le courant d'air indiqué par les flèches F2 peut passer à travers celle-ci de la portion de conduite définie par la paroi 6 à celle définie par la paroi 7, puis à celle définie par la paroi 3 à travers les évidements 16 de la membrane. La section de passage offerte par les évidements 16 doit être adaptée au débit maximal de l'air dans la conduite 5. Bien entendu, le mécanisme de commande du câble 17 peut être prévu pour maintenir celui-ci, et par conséquent la membrane, dans toute position intermédiaire entre celles représentées aux figures 1 et 2, de façon à régler progressivement le débit d'air dans la conduite.

## Revendications

1. - Dispositif de commande d'un courant de fluide comprenant un obturateur mobile disposé dans une conduite pour ledit courant de fluide et pouvant prendre une première position dans laquelle il obture ladite conduite et une seconde position dans laquelle il permet le passage du courant de fluide, caractérisé en ce que l'obturateur est une membrane souple (12) fixée par sa périphérie (11) à la paroi (3,4) de la conduite et qui peut être amenée, par un organe d'entraînement (17) agissant dans la direction du courant, dans ladite première position dans laquelle elle vient en appui sur un siège (7) définissant une ouverture de passage (15) pour le courant de fluide dans ladite conduite, laquelle ouverture est alors obturée par une région centrale (14) de la membrane, et dans ladite seconde position, écartée dudit siège, dans laquelle le courant de fluide passe à travers des évidements (16) ménagés dans une région périphérique (13) de la membrane entourant ladite région centrale.

2. - Dispositif selon la revendication 1, caractérisé en ce que le bord de l'ouverture de passage (15) est décalé dans la direction du courant par rapport à la zone de fixation de la membrane à la paroi et est raccordée à cette zone par une portion de paroi (7) à profil arrondi concave formant ledit siège.

3. - Dispositif selon l'une des revendications 1 et 2, caractérisé en ce que la première position correspond à un état stable de la membrane (12), dans laquelle sa région centrale (14) est sensiblement plane.

4. - Dispositif selon l'une des revendications précédentes, caractérisé en ce que la membrane (12) est ondulée dans sa seconde position.

5. - Dispositif selon l'une des revendications précédentes, caractérisé en ce que l'organe d'entraînement comprend un câble (17) coulissant dans une gaine (20) dont une extrémité (19 est fixe, une partie du câble faisant saillie au-delà de ladite extrémité, dans la direction du courant de fluide, et étant attachée à la région centrale de la membrane (12).

6. - Membrane (12) propre à faire partie d'un dispositif selon l'une des revendications précédentes, comprenant une zone périphérique (11) propre à être fixée à la paroi (3, 7) d'une conduite (5), et présentant une région centrale (14) non évidée, enrourée par une région annulaire (13) munie d'évidements traversants (16).

FIG.1

FIG.2

FIG.3

**Office européen des brevets**

# RAPPORT DE RECHERCHE EUROPEENNE

Numero de la demande

EP    92 40 0372

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-1 793 396 (O. HAENTJENS)<br>* page 1, ligne 26 - ligne 31 *<br>* page 1, ligne 63 - ligne 72; figures *<br>--- | 1 | F16K15/14<br>F16K7/16<br>B60H1/00 |
| A | EP-A-0 229 545 (VALEO)<br>--- | | |
| A | FR-A-2 600 122 (VALEO)<br><br>----- | | |

**DOMAINES TECHNIQUES RECHERCHES (Int. Cl.5 )**

B60H
F16K

Le présent rapport a été établi pour toutes les revendications

| Lieu de la recherche | Date d'achèvement de la recherche | Examinateur |
|---|---|---|
| LA HAYE | 03 AVRIL 1992 | CHRISTENSEN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)